Europäisches Patentamt

European Patent Office

Office européen des brevets

(19)

(11) Veröffentlichungsnummer: **0 331 784 B1**

(12) # EUROPÄISCHE PATENTSCHRIFT

(45) Veröffentlichungstag der Patentschrift: **13.11.91**

(51) Int. Cl.⁵: **A01F 12/40**

(21) Anmeldenummer: **88103813.7**

(22) Anmeldetag: **10.03.88**

(54) **Spleisshäcksler.**

(43) Veröffentlichungstag der Anmeldung:
**13.09.89 Patentblatt 89/37**

(45) Bekanntmachung des Hinweises auf die
Patenterteilung:
**13.11.91 Patentblatt 91/46**

(84) Benannte Vertragsstaaten:
**AT BE DE ES FR GB IT SE**

(56) Entgegenhaltungen:
**EP-A- 0 164 489**      **DE-A- 3 615 151**
**DE-C- 850 818**        **FR-A- 1 095 015**
**GB-A- 684 378**        **US-A- 1 697 925**
**US-A- 2 792 229**      **US-A- 3 669 123**

(73) Patentinhaber: **Wieneke, Franz, Prof. Dr.-Ing.**
**August-Lange-Strasse 14**
**W-3406 Bovenden(DE)**

(72) Erfinder: **Wieneke, Franz, Prof. Dr.-Ing.**
**August-Lange-Strasse 14**
**W-3406 Bovenden(DE)**

(74) Vertreter: **Gossel, Hans K., Dipl.-Ing. Lorenz-**
**Seidler-Gossel et al**
**Widenmayerstrasse 23**
**W-8000 München 22(DE)**

Rank Xerox (UK) Business Services

## Beschreibung

Die Erfindung betrifft einen Spleißhäcksler mit einer in einem wannenförmigen Gehäuse gelagerten, im wesentlichen horizontalen angetriebenen Rotorwelle, an der mehrere radial abstehende, der Zerkleinerung dienende Werkzeuge mit derart schräg zur Wellenachse geneigten Sitrnkanten befestigt sind, daß diese einen fräsenden und/oder schneidenden Hüllzylinder bilden, mit einem oberen, mit dem Gehäuse verbundenen Einlauftrichter, mit im Abstand von dem Hüllzylinder über einen Teil von dessen Umfang konzentrisch zu diesem angeordneten, vorzugsweise an dem Gehäuse befestigten Leisten, mit an den Seitenbereichen des Gehäuses vorgesehenen Auswurföffnungen und mit das Gut in axialer Richtung zu der Welle zu den Auswurföffnungen fördernden Einrichtungen.

Ein Spleißhäcksler dieser Art ist aus der DE-OS 36 15 151 bekannt. Dieser bekannte Spleißhäcksler kann beispielsweise als Anbauhäcksler für Mähdrescher unter dessen Schüttlern angeordnet werden, wobei dieser das in diesen aufgegebene Stroh zu einem Spleißhäcksel verarbeitet, das aus einem Häckselgut besteht, das aus einer Verkürzung der Halme und zusätzlich aus einem mehrfachen Aufspleißen der Halmröhrchen in Längsrichtung entstanden ist. Wird das Stroh nach dem Drusch zu einem derartigen Spleißhäcksel verarbeitet und das Spleißhäcksel auf den Boden ausgestreut, läßt es sich beispielsweise mit einer Kreiselegge oder einem Grubber in die obere Bodenschicht in der Weise einmischen daß eine gute Saatablage bei nachfolgender Direktsaat möglich ist.

Anbauhäcksler für Mähdrescher müssen indes eine so große Leistung aufweisen, daß sie das nach dem Drusch anfallende Stroh vollständig zu Häcksel verarbeiten, ohne daß Stauungen auftreten können. Der bekannte Spleißhäcksler ermöglicht jedoch nur einen begrenzten Materialdurchsatz, weil das zerkleinerte Material in axialer Richtung zur Rotorwelle nicht schnell genug abgefördert werden kann. Die axiale Führung des Gutes durch die Leistenbelegung auf der Innenseite des die Zerkleinerungswerkzeuge umgebenden Mantels reicht für die Förderung größerer Halmgutmassen nicht aus. Ferner ergeben sich Schwierigkeiten bei dem Einzug voluminösen Gutes, da die rotierenden Werkzeuge ein das Gut abstoßendes, rotierendes Strömungsfeld erzeugen. Schließlich läßt sich bei dem bekannten Häcksler das austretende Spleißhäcksel über eine größere Breite nicht verteilen, weil bei der geringen Eigenmasse der feinen Halmgutteilchen oder der Fasern der Luftwiderstand zu stark bremst.

Aufgabe der Erfindung ist es daher, einen Spleißhäcksler der eingangs angegebenen Art erhöhter Leistung und Verteilungsbreite zu schaffen.

Erfindungsgemäß wird diese Aufgabe bei einem Spleißhäcksler der gattungsgemäßen Art dadurch gelöst, daß die Zerkleinerungwerkzeuge selbst als axial fördernde Einrichtungen ausgebildet sind, die das Gut ausgehend von dem mittleren Bereich des Hüllzylinders zu den seitlichen Auswurföffnungen transportieren.

Die axial fördernde Ausbildung der Zerkleinerungswerkzeuge bewirkt, daß das zu häckselnde Gut, das in den Einlauftrichter aufgegeben wird, unter Überwindung der abstoßenden Wirkung der kreisenden Werkzeuge angesaugt wird. Das Gut wird in den von den schneidenden und reißenden Werkzeugen gebildeten Hüllzylinder in der Weise eingezogen, daß es selbst gleichsam einen oberen Teil des Mantels bildet, der den zylindrischen Teil des wannenförmigen Gehäuses zu einem zylindrischen Rohr und damit zu einer Art Axialgebläse schließt. Das einfallende zu häckselnde Gut wird dabei nicht durch Stützscheiben getragen, sondern aus einem von diesem selbst gebildeten schalenförmigen zylindrischen Mantelteil abgefräst, geschnitten und/oder eingezogen, wobei es mechanisch-pneumatisch ausgehend von dem mittleren Gehäusebereich zu den endseitigen Auswurföffnungen auf kreisendem Weg gefördert und auf diesem zu Spleißhäcksel verarbeitet wird.

Die Zerkleinerungswerkzeuge können dadurch als axial fördernde Einrichtungen ausgebildet werden, daß sie in der Weise schräg gestellt und/oder propellerförmig verdrallt werden, daß sie gleichsam Gebläseflügel zusätzlich mit den mechanischen Fördereigenschaften etwa eines Schneckenförderers bilden.

Bei dem erfindungsgemäßen Spleißhäcksler wird der zylindrische Teil des wannenförmigen Gehäuses durch das angesaugte zufließende Gut, das einen oberen zylinderschalenförmigen Mantelteil bildet, gleichsam zu einem Förderrohr geschlossen, in dem das Gut durch die Gebläse mit der erforderlichen Geschwindigkeit unter Verarbeitung zu Spleißhäcksel zu den seitlichen Auswurföffnungen gefördert wird. Die Förderwirkung durch Blasluft kann durch eine mechanische Förderwirkung unterstützt werden, die dadurch erreicht wird, daß die den Hüllzyinder teilweise einfassenden Leisten mit nach außen gerichteter Förderwirkung wendelförmig angeordnet sind.

Der erfindungsgemäße Spleißhäcksler kann stationär oder fahrbar, beispielsweise als Anbauhäcksler für einen Mähdrescher, ausgebildet sein. Mit dem erfindungsgemäßen Spleißhäcksler läßt sich Stroh aller Art verarbeiten, bei dem neben einer Halmverkürzung auch eine mehrfache und somit feine Aufspaltung der Halme in Längsrichtung erfolgt. Daneben lassen sich mit dem erfindungsgemäßen Spleißhäcksler auch andere biologische Produkte, wie Torf, Rinden oder Hausmüll oder auch körnige Stoffe faserig bzw. wollig und fein aufschließen.

Zweckmäßigerweise bestehen die Werkzeuge aus pendelnd an der Welle oder an mehreren zu dieser parallelen und gleichmäßig über deren Umfang verteilten und mit dieser rotierenden Trägern gelagerten Schlagwerkzeugen, deren mit den Reiß- und/oder Schneidkanten versehenen Blätter ausgehend von dem mittleren Bereich des Gehäuses in entgegengesetztem Sinne propellerartig schräg gestellt sind.

Auf der Rotorwelle können auch schräg angestellte schneckenförmig oder propellerartig verschränkte Blätter mit schneidenden und/oder verzahnten Stirnkanten befestigt sein.

Die erfindungsgemäß vorgesehenen flächigen Reiß- oder Schneidwerkzeuge des Rotors wirken mit der Leistenbelegung eines diesen umgebenden Mantels zusammen, wobei die schräg oder propellerartig oder schneckenförmig angestellten Blätter der Werkzeuge neben einer mechanischen axialen Förderwirkung durch Gleiten zusätzlich auch wie Axialgebläse wirken, die den axialen Transport des Häckselguts unterstützende Luftströme erzeugen. Das von oben einfallende Gut bildet dabei ein poröses Mantelsegment, durch das die Luft angesaugt wird. Das Gut läuft auf diese Weise zu den Seiten mehrfach schraubenlinienförmig um und es wird dabei intensiv verkürzt und aufgespalten, so daß der gewünschte Spleißhäcksel entsteht.

Die die Werkzeuge bildenden Blätter können kreisscheibenförmig ausgebildet und drehbar und in unterschiedlichen Winkellagen fixierbar pendelnd an Traghebeln befestigt sein. Diese Ausgestaltung ermöglicht es, deie Blätter nach einer Abstumpfung der Schneid- oder Reißkanten um einen bestimmten Winkelbetrag zu drehen und erneut zu fixieren, so daß geschärfte Bereiche wirksam werden.

In weiterer Ausgestaltung der Erfindung ist vorgesehen, daß auf beide Enden der Rotorwelle Gebläseflügel und/oder Wurfschaufelblätter befestigt sind. Diese bilden endseitige Radialgebläse, die die Förderung von Spleißhäcksel durch Saugluft unterstützen.

Nach einer erfinderischen Ausgestaltung ist vorgesehen, daß die durch die Gebläseflügel und/oder Wurfschaufelblätter endseitig gebildeten Gebläserotoren größere Durchmesser aufweisen als der durch die Werkzeuge gebildete Hüllzylinder und in mit dem wannenförmigen Gehäuse seitlich verbundenen entsprechend in ihrem Durchmesser vergrößerten Rotorgehäusen mit den tangentialen Auswurföffnungen angeordnet sind. Durch diese im Durchmesser größeren Gebläserotoren wird ein die Saugluftförderung unterstützender Druckgradient erzeugt. Die endseitigen Radialgebläse saugen die Luft zusammen mit dem Spleißhäcksel aus dem Häcksler ab und blasen diese in tangentialer Richtung nach hinten aus. Der austretende Luftstrom trägt das feinzerkleinerte Halmgut weit aus. Selbst ein stärkerer Außenwind kann die Ausblasrichtung und -weite des Gutes nicht oder nur unwesentlich beeinträchtigen.

Zweckmäßigerweise sind die Gebläseflügel und/oder Wurfschaufelblätter endseitig mit verzahnten Leisten versehen. Diese verzahnten Leisten können austauschbar an den Gebläseflügeln oder Wurfschaufelblättern befestigt sein und wirken zweckmäßigerweise mit an der Innenwandung der Gebläserotorgehäuse vorgesehenen Leisten zusammen.

Die endseitigen Radialgebläse unterstützen den von den schräg angestellten rotierenden Werkzeugblättern erzeugten Luftstrom und üben aufgrund ihrer größeren Gebläseleistung auf diesen eine zusätzlich saugende Wirkung aus, so daß das Gut durch mechanische Förderwirkung, die erheblich durch den von den seitlichen Gebläsen erzeugten Luftstrom unterstützt wird, ausgetragen wird.

Das Einsaugen des zufließenden Gutes kann auch über ein getrenntes Gebläse erfolgen, das aus dem Einlaufspalt die Luft ansaugt.

Werden endseitige Radialgebläse vorgesehen, können die schneidenden oder reißenden Werkzeuge auch aus schräg auf die Welle aufgesetzten Scheiben bestehen, die sich also nur taumelnd bewegen, ohne einen axial gerichteten Blasluftstrom zu erzeugen.

Insbesondere bei größeren Hüllzylinder-Durchmessern der Werkzeuge mit entsprechend vergrößerten wannenförmigen Gehäusen kann vorgesehen sein, daß der Mantel in einer kleineren Sektion des Umfangs nach hinten offen bleibt und diese Sektion mit achsparallelen Stegen versehen sind, die ein siebartiges Rost bilden, zwischen dem das feinzerkleinerte Gut zum Teil austreten kann. Auf diese Weise kann über die Häckslerbreite bereits ein Teil des Spleißhäcksels austreten, während das längere Gut über die Stege umläuft und weiter zerkleinert wird. Die seitlich angeordneten Gebläse können dann vorwiegend die daran anschließenden seitlichen Streifen mit Spleißhäcksel beblasen, so daß der Boden auf voller Mähbreite gleichmäßig mit Häcksel belegt wird.

Nach einer weiteren Ausgestaltung ist vorgesehen, daß eine Sektion des Mantelumfangs aufklappbar ist, wenn praktisch keine oder nur eine geringe Zerkleinerung des Halmgutes gewünscht wird. Auch zur Wartung und zum Austausch der Werkzeugsegmente läßt sich die entsprechende Klappe in vorteilhafter Weise öffnen.

Mit geöffneter Klappe kann beispielsweise auch dann gearbeitet werden, wenn mürbes Gut zu häckseln ist, das bereits auf kurzem Wege zerkleinert werden kann.

Nach einer weiteren erfinderischen Ausgestaltung ist vorgesehen, daß das wannenförmige Gehäuse mit taschenförmigen Vertiefungen versehen ist. Diese Taschen füllen sich während des Betriebes mit Halmgut auf, so daß die Zerkleinerungswerkzeuge mit komprimierten Strohflächen zusammenarbeiten, die dann praktisch flächiges Widerlager aus Stroh darstellen, die als elastisch wirkende Gegenflächen die Zerkleinerung intensivieren.

Ein derart flächiges Strohpolster als Widerlager oder Gegenhalterung zu den rotierenden Werkzeugen läßt sich auch durch eine Vielzahl von Stiften erreichen, die auf dem zylindrischen Mantelteil angeordnet sind und zwischen denen das Stroh hängenbleibt, so daß es unter Ausbildung einer Gegenfläche gehalten und gespeichert wird.

Ausführungsbeispiele der Erfindung werden nachstehend anhand der Zeichnung näher erläutert. In dieser zeigt

Fig. 1     einen radialen Schnitt durch eine erste Ausführungsform eines Spleißhäckslers längs der Linie A-B in Fig. 3,

Fig. 2     einen weiteren Radial-Schnitt durch den Spleißhäcksler nach Fig. 1 längs der Linie C-D in Fig. 3,

Fig. 3     einen horizontalen Axial-Schnitt durch den Häcksler nach Fig. 1,

Fig. 4     einen Teil einer Abwicklung des Mantels des Häckslergehäuses nach den Fig. 1 bis 3 mit Leistenbelegung,

Fig. 5     einen Schnitt durch einen Spleißhäcksler mit kreissägenartigen Werkzeugblättern, dessen Gehäuse mit einem abklappbaren Mantelteil versehen ist,

Fig. 6     einen Schnitt durch einen Spleißhäcksler mit kreissägenförmigen Werkzeugblättern und mit einem Gehäusemantelausschnitt, in dem rostartig Leisten angeordnet sind,

Fig. 7     einen Axialschnitt durch einen Teil eines Spleißhäckslers mit kreisscheibenförmig ausgebildeten, schlegelartigen Messern,

Fig. 8     einen Schnitt durch eine Ausführungsform eines Spleißhäckslers mit Querstromgebläse,

Fig. 9     einen Schnitt durch eine weitere Ausführungsform eines Spleißhäckslers mit Förderschnecke und Breitstreugebläse,

Fig. 10     einen Schnitt durch den Spleißhäcksler längs der Linie A-B in Fig. 9 und

Fig. 11     einen Schnitt durch einen Spleißhäcksler mit in dessen Gehäusemantel angeordneten taschenförmigen Ausnehmungen.

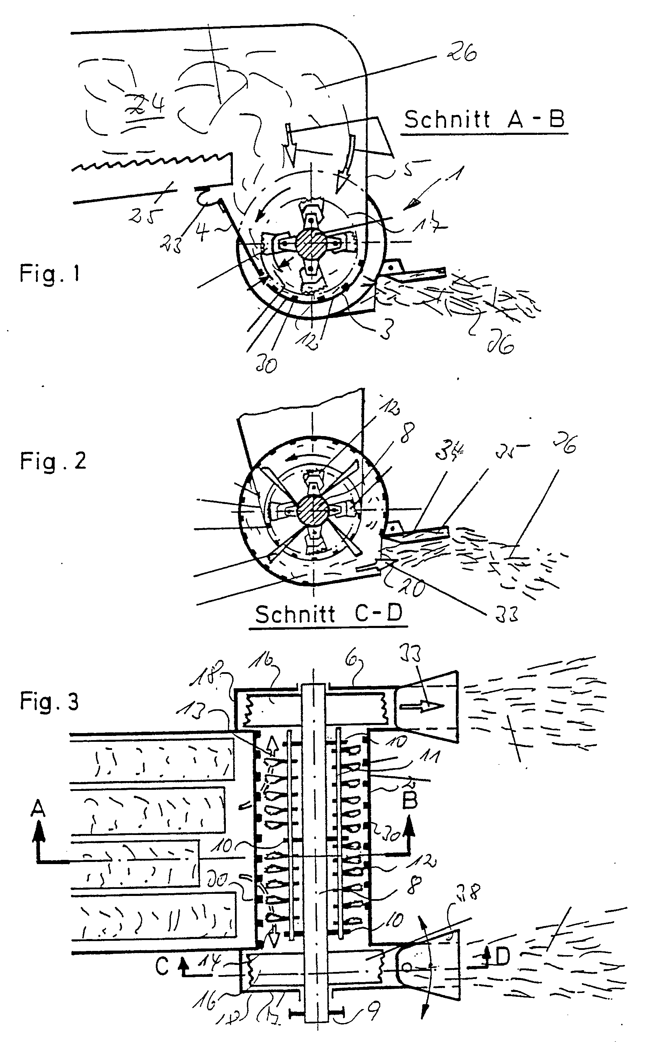

Der Spleißhäcksler nach den Fig. 1 bis 3 ist als Anbauhäcksler für einen Mähdrescher ausgebildet und in üblicher Weise derart unter dessen Schüttlern angeordnet, daß das Stroh in dessen Einlauftrichter fällt.

Der Anbauhäcksler 1 besteht aus einem wannenförmigen Gehäuse 2, das einen zylinderschalenförmig gekrümmten unteren Mantel 3 aufweist. Dieser unten zylinderschalenförmig gekrümmte Mantelbereich erstreckt sich etwa über einen Winkel von 140 bis 160°. An den zylinderschalenförmig gekrümmten Gehäusemantel schließen die den Einlauftrichter bildenden Bleche 4,5 an. In Seitenteilen 6,7 des Gebläsegehäuses 18 ist die Rotorwelle 8 gelagert, auf die eine Antriebsriemenscheibe 9 aufgekeilt ist. Die Rotorwelle 8 ist um jeweils 90° versetzt mit radialen Armen 10 verbunden, in denen Tragstangen 11 gehaltert sind, auf denen Schlegelmesser 12 schwenkbar gelagert sind. Die Schlegelmesser sind ausgehend von dem mittleren Bereich des Gehäuses im entgegengesetzten Sinn derart propellerartig schräg angeordnet, daß sie bei ihrer Rotation wie Gebläseflügel wirken, die einen in Richtung der Pfeile 13, 14 verlaufenden Blasluftstrom erzeugen. Endseitig sind auf die Rotorwelle 8 Gebläsewurfschaufeln 16 aufgesetzt, die einen Gebläserotor bilden, der einen größeren Durchmesser aufweist als der von den Schlegelmessern bei ihrer Rotation gebildete Hüllzylinder 17. Die Gebläseschaufeln 16 sind in scheibenartigen Gehäusen 18 angeordnet, die endseitig mit dem wannenförmigen Gehäuse 2 verbunden sind. Die scheibenartigen Gebläserotorgehäuse sind mit etwa tangentialen Auswurföffnungen 20 versehen, die schwenkbare Leithauben tragen. Die trichterförmigen Bleche 4,5 sind an das haubenartige Gehäuse des Mähdreschers dicht angeschlossen, wobei zum dichtenden Anschluß Dichtmanschetten 23 vorgesehen werden können.

Das Stroh 24 wird von den Schüttlern 25 in den Haubenraum 26 des Mähdreschers gefördert. Es fällt dann von den Schüttlern in den durch die Gehäusebleche 4,5 gebildeten Einlauftrichter und wird in diesem von den durch die Schlegelemesser 12 gebildeten Werkzeugen erfaßt.

Die Blätter der Schlegelmesser 12 sind schräg gestellt oder in sich wie Propellerblätter verwunden, und zwar derart, daß von dem mittleren Bereich des Rotors je eine axiale Förderung von Luft und Häckselgut nach jeder Seite des Anbauhäckslers bewirkt wird. An ihren äußeren Kanten sind die Schlegelmesser 12 verzahnt und/oder angeschärft.

Die Schlegelmesser 12 arbeiten mit Leisten 30 zusammen, die auf der Innenseite des zylinderschalenförmigen Teils des Gehäusemantels angeordnet sind. Die Leisten 30 können achsparallel oder schraubenförmig angeordnet sein.

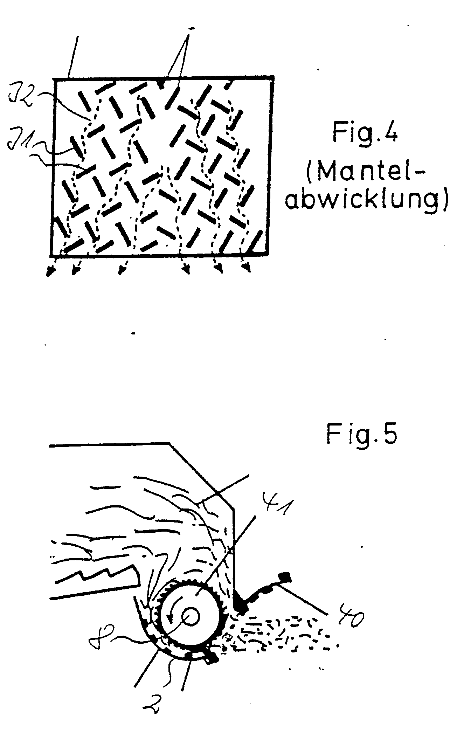

Bei dem aus Fig. 4 ersichtlichen Ausführungsbeispiel bestehen die Leisten aus Abschnitten 31, die etwa schraubenlinienförmig verlaufende Förderpfade 32 begrenzen, wobei die Leistenteile 31 eines jeden Förderpfades 32 versetzt und V-förmig zueinander stehend auf jeder Seite des wellenförmigen Förderweges 32 angeordnet sind.

Die schraubenlinienförmige Anordnung der Leisten 30, 31 begünstigt die axiale Förderung des Häckselgutes.

Die auf beiden Seiten des Häckslers angeordneten Gebläse 16, 18 saugen fördernde Luft aus dem Gehäuse 2 ab, wobei der größere Durchmesser der Schaufelräder 16 einen axial nach außen wirkenden Druckgradienten erzeugt. Der mit Spleißhäcksel 36 beladene Luftstrom 33 trifft auf die Leithaube 34, die an ihrer Unterseite mit Rippen 35 besetzt ist. Die Rippen 35 tauchen schräg in den Luftstrom ein, so daß er auf eine größere Breite aufgeteilt wird und das von dem Luftstrom ausgetragene Spleißhäcksel 36 in größerer Breite verteilt wird.

Zusätzlich kann die Leithaube 34 hin- und herbewegt werden, so daß bei Hangfahrt oder starkem Seitenwind eine entsprechende einseitige Verstellung möglich ist.

Bei dem Ausführungsbeispiel nach Fig. 5 ist der zylinderschalenförmige Teil des Gehäuses 2 gelenkig mit einer zylinderschalenförmigen Klappe 40 versehen, so daß sich das Gehäuse öffnen läßt. Wird nur eine geringere Zerkleinerung gewünscht, kann das Mantelteil 40 in der aus Fig. 5 ersichtlichen Weise in einer geöffneten Stellung fixiert werden.

Bei dem Ausführungsbeispiel nach Fig. 5 bestehen die der Zerkleinerung dienenden Werkzeuge aus kreissägenartigen Scheiben 41, die zur Ausführung von Taumelbewegungen schräg auf der Rotorwelle 8 befestigt sind. Natürlich könnten auch bei der Ausführungsform nach Fig. 5 nach dem Ausführungsbeispiel der Fig. 1 bis 3 pendelnde Schlegelmesser vorgesehen werden.

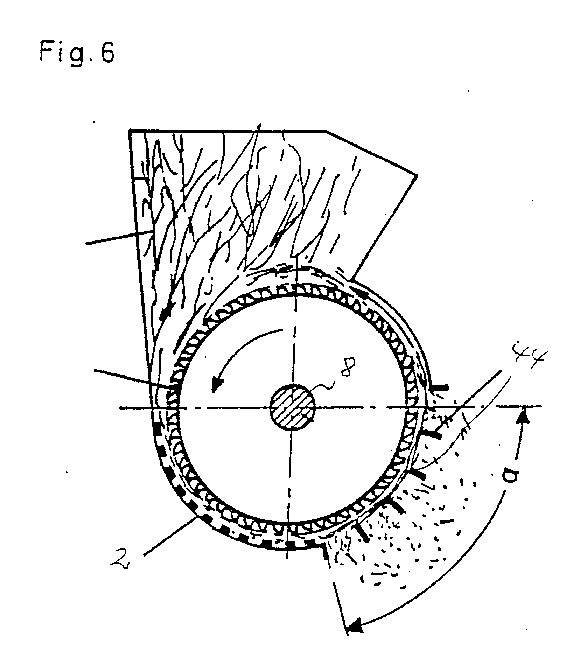

Bei dem Ausführungsbeispiel nach Fig. 6 weist der Gehäusemantel über den Winkelbereich a eine Aussparung auf, in dem ein durch Leisten 44 gebildeter Rost angeordnet ist, der gleichsam ein Sieb bildet, das nur feineren Spleißhäcksel austreten läßt.

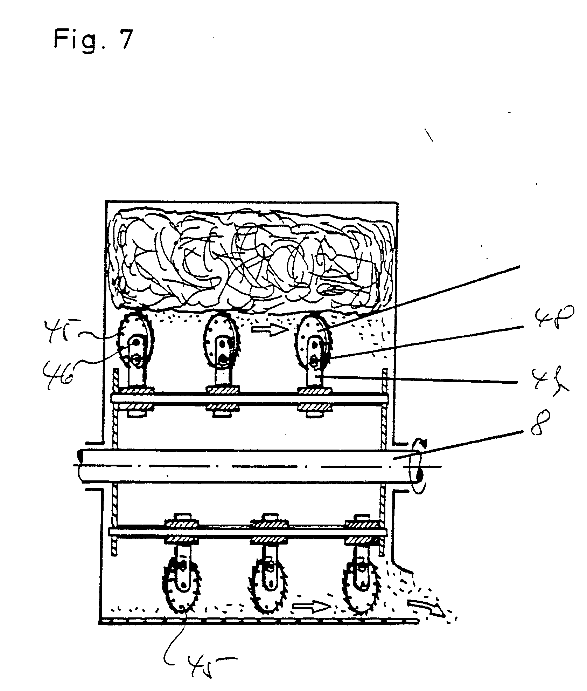

Bei dem Ausführungsbeispiel nach Fig. 7 weisen die Schlegelmesser kreisscheibenförmige an ihrem Umfangsrand verzahnte Messerblätter 45 auf, die um Achsen 46 drehbar an Pendelarmen 47 gelagert sind. Die Messerblätter 45 sind in gleichmäßigen Winkelabständen mit Bohrungen versehen, die sich fluchtend zu Bohrungen der Pendelarme 47 ausrichten lassen, so daß sie relativ zu diesen durch Schrauben 48 fixiert werden können.

Die Schlegelmesser sind von Träger zu Träger in der aus Fig. 7 ersichtlichen Weise versetzt zueinander angordnet.

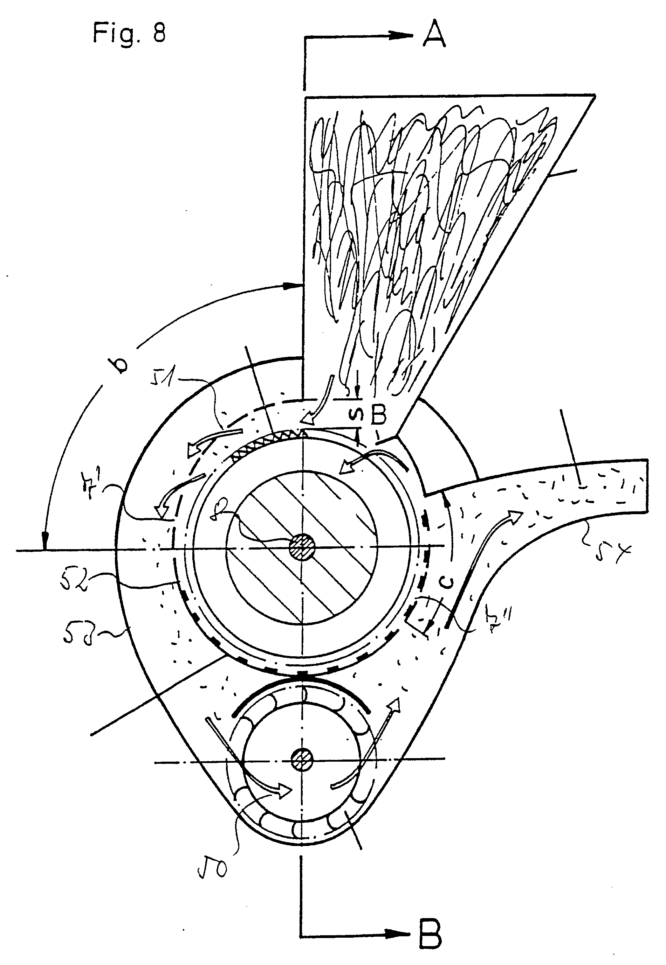

Bei dem Ausführungsbeispiel nach Fig. 8 ist zum Absaugen von Luft aus dem Einlaufzylinder ein Querstromgebläse 50 vorgesehen, das unterhalb der mit verzahnten Scheiben versehenen Rotorwelle 8 angeordnet ist. Das Querstromgebläse 50 saugt die Luft durch Öffnungen 51 an, die in dem Winkelbereich b des Einlaufs des Mantels 52 angeordnet sind. Dadurch wird das Gut aus dem Einlauftrichter angesaugt und in den sich keilförmig verjüngenden Einlaufspalt s eingezogen. Das Querstromgebläse und der Gehäusemantel 52 des Spleißhäckslers sind von einem Gehäuse 53 eingefaßt, das mit einem sich etwa über die Breite des Spleißhäckslers erstreckenden Auswurfkanal 54 versehen ist. Das von dem Querstromgebläse 50 ausgetragene Spleißhäcksel wird somit nach hinten über die ganze Häckselbreite verteilt.

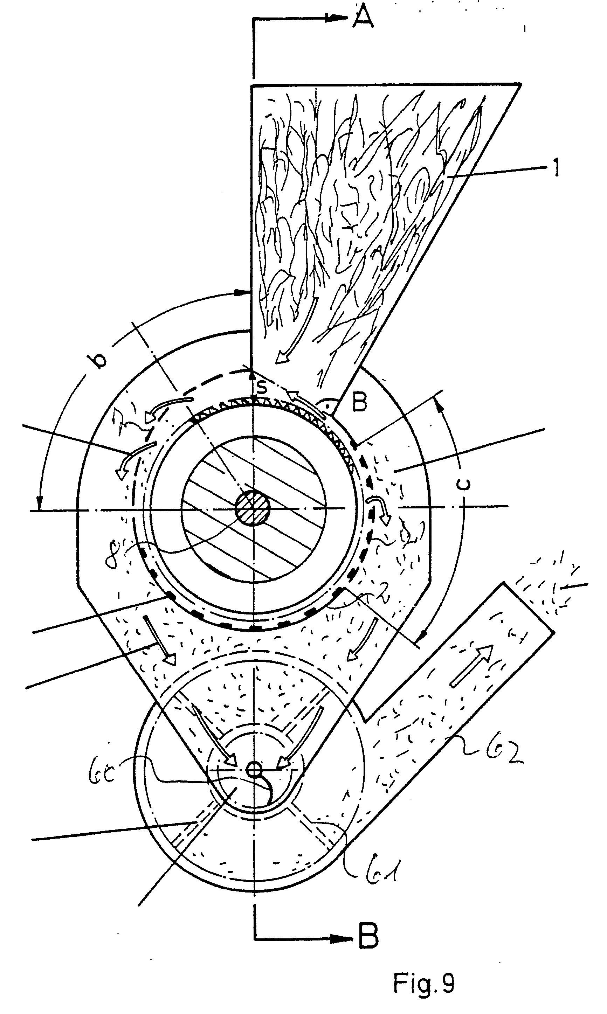

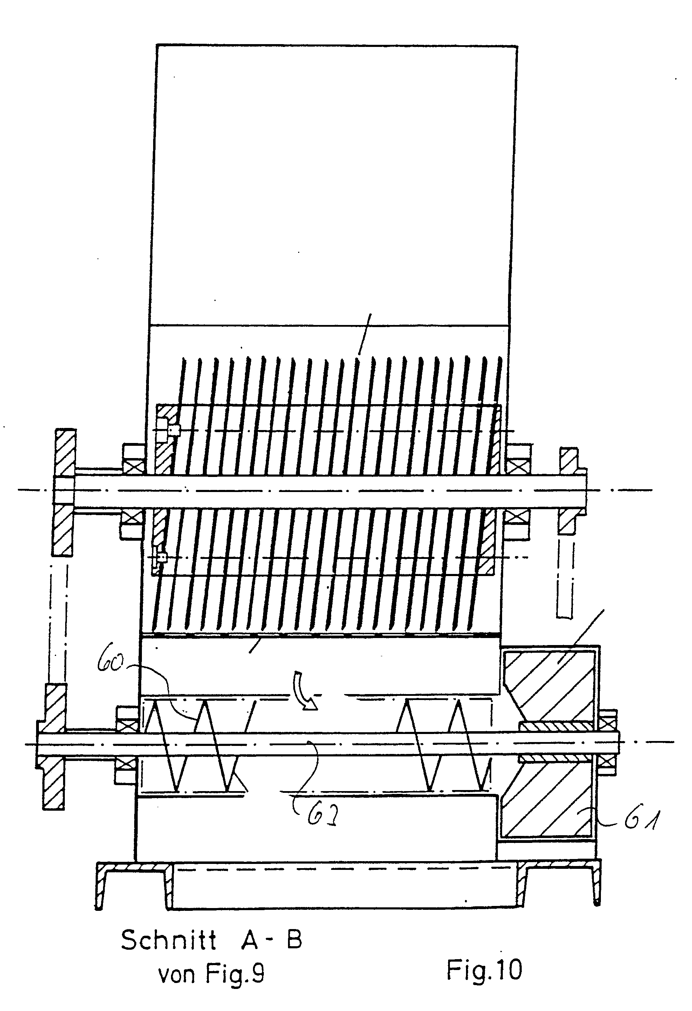

Bei dem Ausführungsbeispiel nach den Fig. 9 und 10 ist unterhalb der Rotorwelle, die mit aus kreissägenscheibenförmigen Blättern bestehenden Werkzeugen besetzt ist, eine Fördereinrichtung angeordnet, die aus einer Förderschnecke 60 besteht. Auf der Schneckenwelle 63 sind endseitig Rotorflügel 61 aufgesetzt, die das Gut aus dem Einlauftrichter ansaugen und in den sich keilförmig verjüngenden Einlaufspalt s einziehen. Der die kreissägenscheibenförmigen Werkzeuge einschließende Mantel 2 weist siebförmige Bereiche 7′, 7″ auf, durch die ausreichend zerkleinertes Häcksel austritt und in die Förderschnecke 60 fällt. Durch den Bereich 7′ wird, wie nach dem Ausführungsbeispiel gemäß Fig. 8, auch das Gut einziehende Luft eingesaugt. Durch die Förderschnecke 60 wird das Gut dem Gebläse 61 zugeführt. Das Gebläse unterstützt den axialen Transport des Gutes und trägt dieses aus dem Austrittskanal 62 aus.

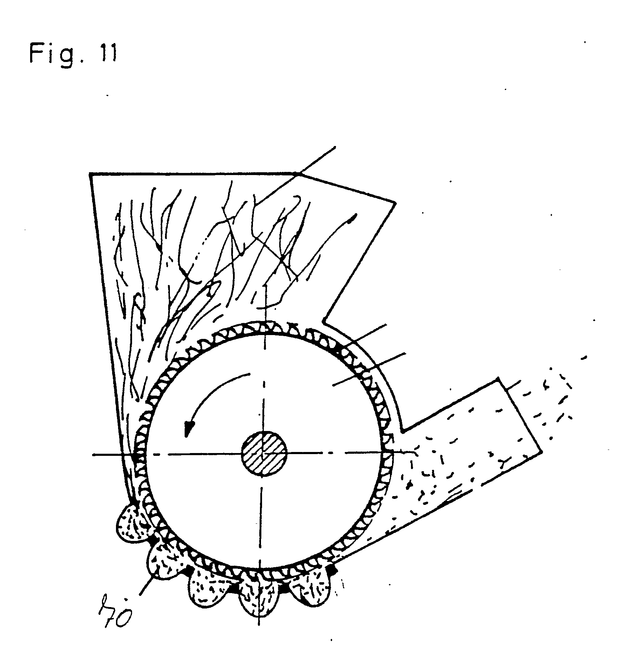

Bei dem Ausführungsbeispiel nach Fig. 11 ist der Gehäusemantel zwischen den Leisten mit taschenartigen Ausnehmungen 70 versehen. Die Taschen 70 des Mantels füllen sich mit zerkleinertem Gut bis zum Hüllkreis der fräsenden Werkzeuge auf und bilden gleichsam ein elastisches Widerlager. Das nachfließende zu zerkleinernde Material wird durch dieses elastisch wirkende Gegenpolster an den Hüllkreis der rotierenden Werkzeuge angedrückt, so daß es nicht durchrutschen kann. Damit wirken die mit Gut aufgefüllten Taschen 70 gleichsam als Gegenhaltefläche. Die Taschen 70 können einen Korb bilden, der eine gute Zerkleinerung gewährleistet, wobei die Korblänge in Umfangsrichtung nach der gewünschten Feinheit des Häckselgutes gewählt werden kann. Durch die Art der Anordnung der Taschen kann das Häckselgut wahlweise nach kurzem Zerkleinerungsweg mit hoher Geschwindigkeit nach hinten auf voller Breite ausgestreut werden.

**Patentansprüche**

1. Spleißhäcksler mit einer in einem wannenförmigen Gehäuse (2) gelagerten im wesentlichen horizontalen, angetriebenen Rotorwelle (8), an der mehrere radial abstehende, der Zerkleinerung dienende Werkzeuge (12) mit derart schräg zur Wellenachse geneigten Stirnkanten befestigt sind, daß diese einen fräsenden und/oder schneidenden Hüllzylinder (17) bilden,
mit einem oberen mit dem Gehäuse verbundenen Einlauftrichter (4,5), vorzugsweise mit im Abstand von dem Hüllzylinder (17) über einen Teil von dessen Umfang konzentrisch zu diesem angeordneten, an dem Gehäuse befestigten Leisten (31),
mit an den Seitenbereichen des Gehäuses vorgesehenen Auswurföffnungen (20) und
mit das Gut (36) in axialer Richtung zu der Rotorwelle (8) zu den Auswurföffnungen (20) fördernden Einrichtungen,

**dadurch gekennzeichnet,**

daß die Zerkleinerungswerkzeuge selbst als axial fördernde Einrichtungen ausgebildet sind, die das Gut (36) ausgehend von dem mittleren Bereich des Hüllzylinders (17) zu den seitlichen Auswurföffnungen (20) transportieren.

2. Spleißhäcksler nach Anspruch 1, dadurch gekennzeichnet, daß die Werkzeuge (12) aus pendelnd an der Rotorwelle (8) oder an mehreren zu dieser parallelen, gleichmäßig über deren Umfang verteilten und mit dieser rotierenden Trägern gelagerten Schlagwerkzeugen bestehen, deren mit den Reiß- und/oder Schneidkanten versehenen Blätter ausgehend von dem mittleren Bereich des Gehäuses im entgegengesetzten Sinne propellerartig schräg angestellt sind.

3. Spleißhäcksler nach Anspruch 2, dadurch gekennzeichnet, daß die Werkzeuge (12) als kreisscheibenförmige Blätter ausgebildet und drehbar und in unterschiedlichen Winkelstellungen fixierbar an pendelnd gelagerten Traghebeln befestigt sind.

4. Spleißhäcksler nach Anspruch 1, dadurch gekennzeichnet, daß die Werkzeuge (12) als an der Rotorwelle (8) schräg angestellte schnekkenförmige oder propellerartig verschränkte Blätter mit schneidenartigen oder verzahnten Stirnkanten ausgebildet sind.

5. Spleißhäcksler nach einem der Ansprüche 1 bis 4, dadurch gekennzeichnet, daß auf die beiden Enden der Rotorwelle (8) Gebläseflügel und/oder Wurfschaufelblätter befestigt sind.

6. Spleißhäcksler nach Anspruch 5, dadurch gekennzeichnet, daß die durch die Gebläseflügel und/oder Wurfschaufelblätter gebildeten Gebläserotoren größere Durchmesser aufweisen als der durch die Werkzeuge (12) gebildete Hüllzylinder (17) und in mit dem wannenförmigen Gehäuse (2) seitlich verbundenen, in ihrem Durchmesser entsprechend vergrößerten Rotorgehäusen mit tangentialen Auswurföffnungen (20) angeordnet sind.

7. Spleißhäcksler nach Anspruch 5 oder 6, dadurch gekennzeichnet, daß die Gebläseflügel und/oder Wurfschaufelblätter endseitig mit verzahnten Leisten (31) versehen sind.

8. Spleißhäcksler nach Anspruch 7, dadurch gekennzeichnet, daß die verzahnten Leisten (31) austauschbar an den Gebläseflügeln oder Wurfschaufelblättern befestigt sind.

9. Spleißhäcksler nach einem der Ansprüche 5 bis 8, dadurch gekennzeichnet, daß die Innenwandung der Gebläserotorgehäuse mit Leisten (31) besetzt sind.

10. Spleißhäcksler nach einem der Ansprüche 1 oder 4 bis 9, dadurch gekennzeichnet, daß die Werkzeuge (12) aus schräg auf die Welle aufgesetzten Scheiben bestehen.

11. Spleißhäcksler nach Anspruch 10, dadurch gekennzeichnet, daß die Scheiben sägezahnartige Umfangsränder aufweisen.

12. Spleißhäcksler nach einem der vorhergehenden Ansprüche, dadurch gekennzeichnet, daß ein sektorartiges Umfangsteil des wannenförmigen Gehäuses (2) abklappbar ist.

13. Spleißhäcksler nach einem der vorhergehenden Ansprüche, dadurch gekennzeichnet, daß ein sektorartiges Umfangsteil des Gehäuses durchbrochen ist und daß in diesem Teil den Hüllzylinder (17) siebartig einfassende Leisten (31) angeordnet sind.

14. Spleißhäcksler nach einem der vorhergehenden Ansprüche, dadurch gekennzeichnet, daß auf der Innenseite des Gehäusemantels Leisten (31) achsparallel oder schraubenförmig angeordnet sind.

15. Spleißhäcksler nach einem der vorhergehenden Ansprüche, dadurch gekennzeichnet, daß die Leisten (31) aus etwa pfeilförmig versetzt zueinander angeordneten Abschnitten bestehen, die wellenförmige, jeweils ausgehend von dem mittleren Gehäusebereich wendelförmig nach außen gerichtete Förderwege begrenzen.

16. Spleißhäcksler nach einem der Ansprüche 1 bis 13, dadurch gekennzeichnet, daß der Mantel auf seiner Innenseite mit einer Vielzahl von Stiften besetzt ist.

17. Spleißhäcksler nach einem der vorhergehenden Ansprüche, dadurch gekennzeichnet, daß in der Wandung des wannenförmigen Gehäuses (2) Taschen bildende Ausnehmungen oder axial oder schraubenlinienförmig verlaufende Kanäle mit taschenförmigem Querschnitt angeordnet sind.

18. Spleißhäcksler nach einem der vorhergehenden Ansprüche, dadurch gekennzeichnet, daß an den Ausblasöffnungen Leithauben angeordnet sind, die mit Stegen zum seitlichen Ableiten des Häcksel-Blasluftstromes versehen sind.

19. Spleißhäcksler nach Anpsruch 19, dadurch gekennzeichnet, daß die Leithaube seitlich verstellbar und/oder hin- und herverschwenkbar angeordnet ist.

20. Spleißhäcksler nach einem der vorhergehenden Ansprüche, dadurch gekennzeichnet, daß die den Einlauftrichter bildenden Bleche durch elastische Schürzen ganz oder teilweise an das unter den Schüttlern befindliche Bodenblech und/oder die Bleche der Mähdrescherhaube angeschlossen sind.

21. Spleißhäcksler nach Anspruch 1, dadurch gekennzeichnet, daß das die Rotorwelle (8) mit den Werkzeugen (12) einfassende wannenförmige Gehäuse (2) in Teilen seines oberen und unteren Bereiches mit Löchern versehen ist, daß unterhalb des Gehäuses ein sich etwa über die Breite des Spleißhäckslers erstreckendes Querstromgebläse angeordent ist und daß das den Mantel des Spleißhäckslers und des Querstromgebläses einschließende Gehäuse mit einem sich etwa über die Breite des Spleißhäckslers erstreckenden Breitwurfkanal versehen ist.

22. Spleißhäcksler nach Anspruch 1, dadurch gekennzeichnet, daß unterhalb des in seinem oberen und unteren Bereich mit Luftaustritts- und Sieblöchern versehenen Mantels des Spleißhäckslerrotors eine sich etwa über dessen Länge erstreckende Förderschnecke in einem den Spleißhäckslermantel einschließenden Gehäuse angeordnet ist und daß auf den Enden der Schneckenwelle Gebläserotoren in etwa zylinderscheibenförmigen Gehäusen angeordnet sind, die mit tangentialen Auswurfkanälen versehen sind.

## Claims

1. A splitting chaff cutter comprising a substantially horizontal, driven rotor shaft (8) which is mounted in a trough-like housing (2) and to which are fixed a plurality of radially projecting tools (12) serving for grinding purposes, with front edges which are inclined relative to the axis of the shaft in such a way that said edges form a milling and/or cutting envelope cylinder (17), an upper intake hopper (4, 5) connected to the housing, preferably having bars (31) which are secured to the housing and which are arranged at a spacing from the envelope cylinder (17) over a part of the periphery thereof and concentrically with respect thereto, ejection openings (20) at the side regions of the housing, and devices for conveying the material (36) in the axial direction relative to the rotor shaft (8) to the ejection openings (20), characterised in that the grinding tools themselves are in the form of axially conveying devices which transport the material (36) from the central region of the envelope cylinder (17) to the lateral ejection openings (20).

2. A splitting chaff cutter according to claim 1 characterised in that the tools (12) comprise beater tools which are mounted swingingly on the rotor shaft (8) or on a plurality of carriers which are parallel to the rotor shaft and which are uniformly distributed over the periphery thereof and which rotate therewith, the beater tools having blades which are provided with the tearing and/or cutting edges and which are set inclinedly in a propeller-like configuration in opposite directions starting from the central region of the housing.

3. A splitting chaff cutter according to claim 2 characterised in that the tools (12) are in the form of blades in the shape of circular discs and are secured to swingingly mounted support levers in such a way as to be adapted to rotate and fined in different angular positions.

4. A splitting chaff cutter according to claim 1 characterised in that the tools (12) are in the form of blades with cutting edge-like or toothed front edges, the blades being set inclinedly on the rotor shaft (8) and being of a screw-like configuration or twisted in a propeller-like fashion.

5. A splitting chaff cutter according to one of claims 1 to 4 characterised in that fan blades and/or thrower impeller blades are fixed on the two ends of the rotor shaft (8).

6. A splitting chaff cutter according to claim 5 characterised in that the fan rotors formed by the fan blades and/or thrower impeller blades are of larger diameter than the envelope cylinder (17) formed by the tools (12) and are arranged in rotor housings with tangential ejection openings (20), which rotor housings are laterally connected to the trough-like housing (2) and are correspondingly enlarged in regard to their diameter.

7. A splitting chaff cutter according to clad 5 or claim 6 characterised in that the fan blades and/or thrower impeller blades are provided at their ends with toothed bars (31).

8. A splitting chaff cutter according to claim 7 characterised in that the toothed bars (31) are interchangeably secured to the fan blades or thrower impeller blades.

9. A splitting chaff cutter according to one of claims 5 to 8 characterised in that the inside wall of the fan rotor housings is fitted with blades (31).

10. A splitting chaff cutter according to one of claims 1 or 4 to 9 characterised in that the tools (12) comprise discs which are fitted inclinedly on to the shaft.

11. A splitting chaff cutter according to claim 10 characterised in that the discs have sawtooth-like peripheral edges.

12. A splitting chaff cutter according to one of the preceding claims characterised in that a sector-like peripheral portion of the trough-like housing (2) can be swung down.

13. A splitting chaff cutter according to one of the preceding claims characterised in that a sector-like peripheral portion of the housing is apertured and arranged in said portion are bars (31) which enclose the envelope cylinder (17) in a sieve-like configuration.

14. A splitting chaff cutter according to one of the preceding claims characterised in that bars (31) are arranged on the inside of the peripheral surface of the housing in parallel relationship with the axis or in a helical configuration.

15. A splitting chaff cutter according to one of the preceding claims characterised in that the bars (31) comprise portions which are arranged substantially in an arrow-like configuration in displaced relationship with respect to each other and which define wavy conveyor paths which are each directed outwardly in a helical configuration starting from the central region of the housing.

16. A splitting chaff cutter according to one of claims 1 to 13 characterised in that the casing is provided on its inside with a multiplicity of pins.

17. A splitting chaff cutter according to one of the preceding claims characterised in that provided in the wall of the trough-like housing (2) are openings forming pockets, or passages extending axially or in a helical configuration, of a pocket-shaped cross-section.

18. A splitting chaff cutter according to one of the preceding claims characterised in that disposed at the blowing-out openings are guide hoods provided with limb portions for laterally diverting the chaff-blowing air flow.

19. A splitting chaff cutter according to claim 19 characterised in that the guide hood is arranged to be laterally adjustable and/or reciprocatingly pivotable.

20. A splitting chaff cutter according to one of the preceding claims characterised in that the metal plates forming the intake hopper are connected by resilient skirts entirely or partially to the bottom metal plate beneath the walkers and/or the metal plates of the combine harvester hood.

21. A splitting chaff cutter according to claim 1 characterised in that the trough-like housing (2) which encloses the rotor shaft (8) with the tools (12) is provided with holes in parts of its upper and lower region, that arranged beneath the housing is a transverse flow blower which extends substantially over the width of the chaff cutter and that the housing which encloses the casing of the chaff cutter and the transverse flow blower is provided with a widthwise projection passage which extends substantially over the width of the chaff cutter.

22. A splitting chaff cutter according to claim 1 characterised in that arranged beneath the casing of the chaff cutter rotor, which is provided in its upper and lower regions with air outlet and sieve holes, is a conveyor screw extending substantially over the length of the chaff cutter rotor, in a housing enclosing the chaff cutter casing, and that arranged on the ends of the screw shaft are fan rotors in housings which are substantially in the form of cylindrical discs and which are provided with tangential ejection passages.

**Revendications**

1. Hacheur fendeur avec un arbre de rotor mené (8) sensiblement horizontal, monté dans une enceinte en forme de cuvette (2), auquel plusieurs outils radialement saillants (12), servant à la fragmentation, sont fixés avec des arêtes frontales inclinées par rapport à l'axe d'arbre de telle façon obliquement que celles-ci forment un cylindre enveloppant, fraisant et/ou coupant (17), avec une trémie d'entrée supérieure (45) reliée à l'enceinte, de préférence avec des barettes (31) disposées à une certaine distance du cylindre enveloppant (17) sur une partie de la périphérie de celui-ci, concentriquement à celui-ci et fixées à l'enceinte, avec des orifices d'éjection (20) prévus dans les zones latérales de l'enceinte et avec des dispositifs transportant le produit (36) en direction axiale vers l'arbre de rotor (8) vers les orifices d'éjection (20), caractérisé en ce que les outils fragmenteurs sont eux-mêmes réalisés sous forme de dispositifs transportant axialement, qui transportent le produit (36) en partant de la zone médiane du cylindre enveloppant (17) jusqu'aux orifices d'éjection latéraux (20).

2. Hacheur fendeur selon la revendication 1, caractérisé en ce que les outils (12) se composent d'outils de frappe montés pendulairement sur l'arbre de rotor (8) ou sur plusieurs supports parallèles à ceui-ci, uniformément répartis sur la périphérie de celui-ci et tournant avec celui-ci, les lames de ces outils, pourvues d'arêtes déchirantes et/ou coupantes, étant positionnées obliquement à la façon d'une hélice propulsive en sens contraire en partant de la zone centrale de l'enceinte.

3. Hacheur fendeur selon la revendication 2, caractérisé en ce que les outils (12) sont réalisés sous forme de lames en forme de disque circulaire et sont fixés, de façon à pouvoir tourner et être fixés dans des positions angulaires différentes, à des leviers porteurs montés pendulairement.

4. Hacheur fendeur selon la revendication 1, caractérisé en ce que les outils (12) sont réalisés sous forme de lames en forme de vis sans fin ou torsadées à la façon d'une hélice propulsive à arêtes frontales formant tranchant ou dentées et positionnées obliquement sur l'arbre de rotor (8).

5. Hacheur fendeur selon l'un des revendications 1 à 4, caractérisé en ce qu'aux deux extrémités de l'arbre de rotor (8) sont fixées des pales de ventilateur soufflant et/ou des aubes à éjection.

6. Hacheur fendeur selon la revendication 5, caractérisé en ce que les rotors de ventilateur soufflant, constitués par les pales de ventilateur soufflant et/ou par les aubes à éjection, présentent des diamètres plus grands que le cylindre enveloppant (17) formé par les outils (12) et sont disposés dans des boîtiers de rotor à orifices d'éjection tangeantiels (20), agrandis d'une façon correspondant à leur diamètre et reliés latéralement à l'enceinte en forme de cuvette (2).

7. Hacheur fendeur selon la revendication 5 ou 6, caractérisé en ce que les pales de ventilateur soufflant et/ou les aubes à éjection sont pourvues, du côté de l'extrémité, de barettes dentées (31).

8. Hacheur fendeur selon la revendication 7, caractérisé en ce que les barettes dentées (31) sont fixées de façon interchangeable aux pales de ventilateur soufflant ou aux aubes a éjection.

9. Hacheur fendeur selon l'une des revendictions 5 à 8, caractérisé en ce que la paroi interne du boîtier de rotor de ventilateur soufflant est garnie de barettes (31).

10. Hacheur fendeur selon l'une des revendications 1 ou 4 à 9, caractérisé en ce que les outils (12) consistent en des disques calés obliquement sur l'arbre.

11. Hacheur épisseur selon la revendication 10, caractérisé en ce que les disques présentent des bords périphériques en forme de dents de scie.

12. Hacheur fendeur selon l'une des revendication précédentes, caractérisé en ce qu'une portion périphérique en forme de secteur de l'enceinte en forme de cuvette (2) est rabattable.

13. Hacheur fendeur selon l'une des revendications précédentes, caractérisé en ce qu'une portion périphérique en forme de secteur de l'enceinte est traversée par une ouverture et en ce que dans cette partie sont disposées des barettes (31) entourant, à la façon d'un tamis, le cylindre enveloppant (17).

14. Hacheur fendeur selon l'une des revendications précédentes, caractérisé en ce que, sur la face interne de la paroi latérale d'enceinte, des barettes (31) sont disposées parallélement à l'axe ou en forme de vis.

15. Hacheur fendeur selon l'une des revendications précédentes, caractérisé en ce que les barrettes (31) se composent de segments disposés en étant décalés sensiblement en forme de flèche les uns par rapport aux autres, qui délimitent, respectivement en partant de la zone médiane d'enceinte, des trajets de transport hélicoïdaux dirigés vers l'extérieur.

16. Hacheur fendeur selon l'une des revendications 1 à 13, caractérisé en ce que la paroi latérale est garnie d'une pluralité de chevilles sur sa face interne.

17. Hacheur fendeur selon l'une des revendications précédentes, caractérisé en ce que dans la paroi de l'enceinte en forme de cuvette (2) sont aménagés des évidements formant des poches ou des canaux à section transversale en forme de poche, s'étendant axialement ou hélicoïdalement.

18. Hacheur fendeur selon l'une des revendications précédentes, caractérisé en ce que sur les orifices d'éjection par soufflage sont disposés des capots directeurs qui sont pourvus de nervures pour le guidage latéral d'évacuation du courant d'air de soufflage de produit haché.

19. Hacheur fendeur selon la revendication 18, caractérisé en ce que le capot directeur est monté de façon latéralement déplaçable et/ou de manière à pouvoir pivoter en va-et-vient.

20. Hacheur fendeur selon l'une des revendications précédentes, caractérisé en ce que les tôles, formant la trémie d'entrée, sont raccordées par des tabliers élastiques totalement ou partiellement à la tôle de plancher se trouvant sous les secoueurs et/ou aux tôles du capot de moissonneuse-batteuse.

21. Hacheur fendeur selon la revendication 1, caractérisé en ce que l'arbre de rotor (8), avec l'enceinte en forme de cuvette (2) renfermant les outils (12), est pourvu de trous dans des parties de ces zones supérieure et inférieure, en ce qu'en dessous de l'enceinte est disposé un ventilateur soufflant à courant transversal s'étendant sensiblement sur la largeur du hacheur fendeur et en ce que le carter, renfermant la paroi latérale du hacheur fendeur et du ventilateur soufflant à courant transversal, est pourvu d'un canal d'éjection large s'étendant sensiblement sur la largeur du hacheur fendeur.

22. Hacheur fendeur selon la revendication 1, caractérisé en ce qu'en dessous de la paroi latérale du rotor de hacheur fendeur, pourvue de trous de sortie d'air et de tamis dans sa zone supérieure et inférieure, une vis transporteuse sans fin, s'étendant sensiblement sur la longueur du rotor, est disposée dans un carter renfermant la paroi latérale du hacheur fendeur et en ce que, sur les extrémités de l'arbre de vis sans fin, des rotors de ventilateur soufflant sont disposés dans des carters sensiblement en forme de disque cylindrique, qui sont pourvus de canaux d'éjection tangentiels.

EP 0 331 784 B1

Fig. 1

Schnitt A - B

Fig. 2

Schnitt C-D

Fig. 3

11

Fig.4
(Mantelabwicklung)

Fig.5

Fig.6

## Fig. 7

Fig. 8

Fig.9

Schnitt A - B
von Fig.9                    Fig.10

Fig. 11